# EUROPEAN PATENT APPLICATION

(11) **EP 3 693 601 A1**
(43) Date of publication of application: **12.08.2020**
(21) Application number: 19156003.6
(22) Date of filing: 07.02.2019
(51) Int. Cl.: F03D 80/30, F03D 80/50

(54) **LIGHTNING PROTECTION SYSTEM OF A WIND TURBINE BLADE**

(71) Applicant: LM Wind Power A/S, 6000 Kolding (DK)
(72) Inventor: Hansen, Lars Bo, 6000 Kolding (DK)
(74) Representative: COPA Copenhagen Patents

(57) **Abstract**

Disclosed is a lightning protection system of a wind turbine blade, which comprises at least one lightning receptor being mounted in a tip end region of the wind turbine blade, a first conductor and a second conductor, wherein the first conductor and the second conductor lead to a root region of the wind turbine blade, and wherein the first and the second conductor are connected at the lightning receptor.

## Description

The present disclosure relates to a lightning protection system for a wind turbine blade and to a method of testing a lightning protection system and/or parts thereof.

### BACKGROUND

As wind turbines and wind turbine blades increase in size, the risk of lightning striking the wind turbine increases. It is therefore of increasing interest to provide wind turbines and in particular wind turbine blades with lightning protection measures.

It is known to provide blades for wind turbines with lightning receptors that are in electric connection with a down conductor, inside the blade, connected via the hub and nacelle of the wind turbine to the ground.

Document US 2016/369781 A shows a lightning protection system comprising several conductors in order to achieve a balanced distribution of currents.

A lightning protection system has to be inspected regularly. The lightning receptors and down conductors can be controlled by measuring their electric resistance.

At known wind turbines, it is necessary to rappel down the blade in order to connect the probe of a resistance measuring device to the lightning receptor. This procedure is very time consuming and results in high costs for service work and a high maintenance time of the wind turbine.

### SUMMARY

It is an object of the present invention to provide a system for lightning protection of a wind turbine blade and to provide a method for inspecting a lightning protection system and/or parts thereof with reduced service requirements.

The object of the invention is achieved by a lightning protection system of a wind turbine blade and by a method for testing a lightning protection system of a wind turbine according to the subject matter of the independent claims.

Preferred embodiments of the invention are subject matter of the dependent claims, the description and the drawings.

A wind turbine blade typically comprises a root region, an airfoil region with a tip, a pressure side, a suction side and a chord line extending between a leading edge and a trailing edge.

The invention relates to a lightning protection system of a wind turbine blade, which comprises at least one lightning receptor configured to be mounted in a tip end (distal end) region of the wind turbine blade. Also disclosed is a wind turbine blade comprising the described lightning protection system.

The system comprises a first conductor and a second conductor, the first conductor and the second conductor being configured to lead to a root region of the wind turbine blade, wherein the first and the second conductor are connected at the at least one lightning receptor.

According to the invention, two conductors are provided which are connected with the at least one lightning receptor and which form a loop.

For measuring the resistance of the conductors, it is not necessary to connect a probe of a measuring device with the lightning receptor. It is sufficient to detach at least one conductor from a connection element in the root region, e.g. a cable shoe, and to measure the resistance on the electrical path leading to the receptor in the tip end region and back to the end of the other conductor in the root region.

The first and the second conductor are connected to the lightning receptor. Preferably, the first and the second conductor are spaced from each other at the connection area. So, the lightning receptor is also included in the electrical path. An inspection by measuring the resistance thereby may also include the lightning receptor.

The at least one lightning receptor is configured to be mounted in the tip end region, which is arranged adjacent to the tip of the blade. The lightning protection system may alternatively or additionally comprise one or more other lightning receptors configured to be mounted at other positions of the wind turbine blade.

The lightning receptor can be embodied as a metal insert, e.g. a rod, which protrudes from the surface of a tip part of the lightning protection system in the tip end region.

Preferably, the lightning receptor comprises a high temperature resistant material, e.g. a tungsten and/or a nickel alloy.

According to a preferred embodiment of the invention, the first conductor is an outer conductor of a coaxial cable and the second conductor is an inner conductor of the coaxial cable. The inner conductor and/or the outer conductor may be formed by a plurality of wires, such as a plurality of copper wires.

A coaxial cable usually comprises an inner conductor surrounded by a tubular insulating layer, which is surrounded by a tubular conducting shield. A coaxial cable may be known to carry signals. However, according to the disclosure, the conducting shield is not specifically used to carry a signal inside the cable or to protect the inner conductor against electromagnetic interferences. The conducting shield is rather used as a conductor for deducting the current down to the ground if a lightning strikes the receptor.

In case of a lightning strike, differences in the electrical tension between the conductors may cause damaging of the insulation between the conductors. However, with utilization of a coaxial cable, in case a lightning strikes an electrical breakdown between the first and the second conductor damaging the insulation between the conductors may be avoided, since the outer conductor forms a Faraday cage.

Hence, it is not necessary, that the first and the second conductor have the same cross sectional area and the same length. However, according to a preferred embodiment, the inner and outer conductor have a similar cross sectional area, wherein the cross sectional area of the outer conductor corresponds to the cross sectional area of the inner conductor +/- 20%. Both conductors together form the down conductor of the lightning protection system. A similar cross sectional area of the conductors results in a similar or equal resistance in the conductors. That provides a higher accuracy on the resistance measurement and might also enable to find more failure modes.

The inner conductor and/or the outer conductor may have a cross sectional area between 30-40 mm². The inner conductor and/or the outer conductor may consist of copper and/or a copper alloy.

Preferably, at least the outer conductor consists of copper, respectively a copper alloy, and/or has a cross sectional area of at least 15 mm².

According to another embodiment of the invention, a two-core cable is used, wherein the first conductor has the same cross sectional area and the same length as the second conductor. Due to the same length and same cross sectional area, high voltage differences between the conductors, which might result in an electrical breakdown, can be avoided.

According to all embodiments of the invention, the first and/or second conductor preferably comprises a multitude of wires, in particular copper wires, respectively of a copper alloy.

The first and/or second conductor comprises, according to an embodiment of the invention, a semi-conductive wrapping. By such a semi-conductive wrapping, stress points in the electric field may be reduced. The electrical field will be homogenized. This results in a reduced risk of a local dielectric breakdown through the insulation between the conductors or to adjacent conductive components of the wind turbine. A semi-conductive wrapping can be embodied as a polymer material, e.g. a tape, which comprises conductive particles, e.g. carbon particles.

According to a preferred embodiment of the invention, the first conductor is connected to a first connection block in the tip end region, and the second conductor is connected to a second connection block. The at least one receptor is inserted in a channel leading through the first and the second connection block. The first connection block and the second connection block may be arranged such that the at least one receptor may be inserted through both the first and the second connection block. The first connection block and the second connection block may be spaced and/or electrically insulated. For example, such that electrical connection between the first connection block and the second connection block is provided by the at least one receptor being inserted through the first and the second connection block.

This embodiment of the invention results in a lightning protecting system, wherein the loop, which is formed by the two conductors, will be closed when the receptor is inserted into the tip end region.

Preferably, the conductors and the connection blocks are placed inside a laminate which forms the blade. The receptor is inserted into a channel which extends through at least one connection block.

Preferably, the channel in one connection block is embodied as a blind hole. The blind hole may serve as a mechanical stop, when the receptor is inserted into channel formed in the connection block.

The first connection block and the second connection block can be embodied as an angular part. The first conductor and the second conductor can be connected to the connection block in a thicker region of the respective connection block.

The first and the second conductor are preferably detachably connected with a connection element, being configured to be mounted at the root region of the wind turbine blade. A cable shoe can be used to establish an electrical connection between the first conductor and/or the second conductor and the connection element. The respective conductor can be easily detached in the root region and the electrical resistance can be measured without connection to a probe in the tip end region.

According to a further embodiment of the invention, at least two lightning receptors are connected with the first and the second conductor. A first receptor of the at least two receptors may be embodied to be inserted at the pressure side of the wind turbine blade and a second receptor of the at least two receptors may be embodied to be inserted at the suction side of the wind turbine blade. The conductors of the lightning protection system may serve as down conductors for lightning receptors on both sides of the blade. Preferably, both receptors are inserted in the same connection blocks, which may be arranged opposite to each other as described above.

The disclosure further relates to a wind turbine and/or a wind turbine blade, comprising a lightning protection system as described above. The wind turbine comprises at least one wind turbine blade with a lightning protection system, which comprises two conductors leading to a receptor in the tip end region.

The invention further relates to a method for testing a lightning protection system of a wind turbine and/or a wind turbine blade. In particular, the method is used for testing a lightning protection system of a wind turbine and/or wind turbine blade as described above.

The wind turbine comprises a wind turbine blade with a least one lightning receptor in a tip end region being connected with a first conductor and a second conductor, wherein the first and the second conductor lead to a root region of the wind turbine blade.

According to the invention, the electrical resistance of an electrical path is tested, which leads from an end of the first conductor in the root region to the lightning receptor in the tip end region and from the lightning receptor back through the second conductor to an end of the second conductor in the root region.

By measuring the electrical resistance though a loop from the root region, rappelling down the blade can be avoided, and testing of the lightning protection system may be made easier.

Prior to the testing of the electrical resistance, the first and/or the second conductor may be detached from a connection element at the root region of the wind turbine blade. A conductive path is formed by the loop provided by the first and second conductor and the at least one lightning receptor.

Preferably, the electrical resistance is measured with a four-terminal sensing method. This measuring method uses separate pairs of current-carrying and voltage-sensing electrodes and enables a very accurate electrical resistance measuring. With the invention, demands according to IEC61400-24 ed. 1.0 may be fulfilled.

### BRIEF DESCRIPTION OF THE FIGURES

Embodiments of the disclosure will be described in more detail in the following with regard to the accompanying figures. The figures show one way of implementing the present invention and are not to be construed as being limiting to other possible embodiments falling within the scope of the attached claim set.
Fig. 1 is a schematic diagram illustrating an exemplary wind turbine,
Fig. 2 is a schematic diagram illustrating an exemplary wind turbine blade,
Fig. 3 is a schematic drawing showing the components of the lightning protection system and a cross sectional view of the root part,
Fig. 4 is detailed cross sectional view of the tip part of the lightning protection system,
Fig. 5 is a sectional view along line A-A of Fig 4,
Fig. 6 is a sectional view along line B-B of Fig 4,
Fig. 7 to Fig. 9 are cross sectional views of various embodiments of a coaxial cable, which can be used to provide the first and the second conductor,
Fig. 10 is a dimensioned drawing of a coaxial cable according to a preferred embodiment of the invention,
Fig. 11 and Fig. 12 are cross sectional views of various embodiments of a two-core cable, which can be used to provide the first and the second conductor,
Fig. 13 is a flow chart showing the steps to inspect a lightning protection system according to an embodiment of the invention.

### DETAILED DESCRIPTION

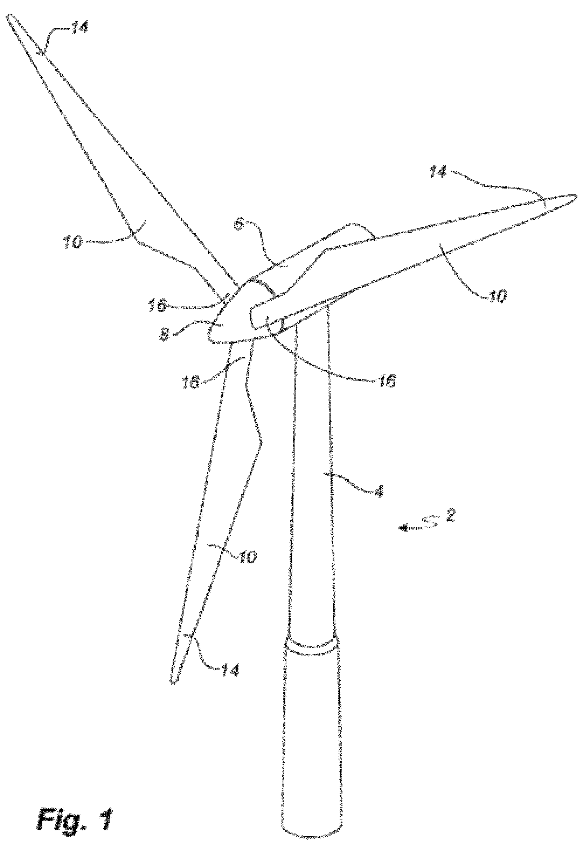

Fig. 1 illustrates a conventional modern upwind wind turbine 2 according to the so-called "Danish concept" with a tower 4, a nacelle 6 and a rotor with a substantially horizontal rotor shaft. The rotor includes a hub 8, and three blades 10 extending radially from the hub 8, each having a blade root 16 nearest the hub and a blade tip 14 furthest from the hub 8.

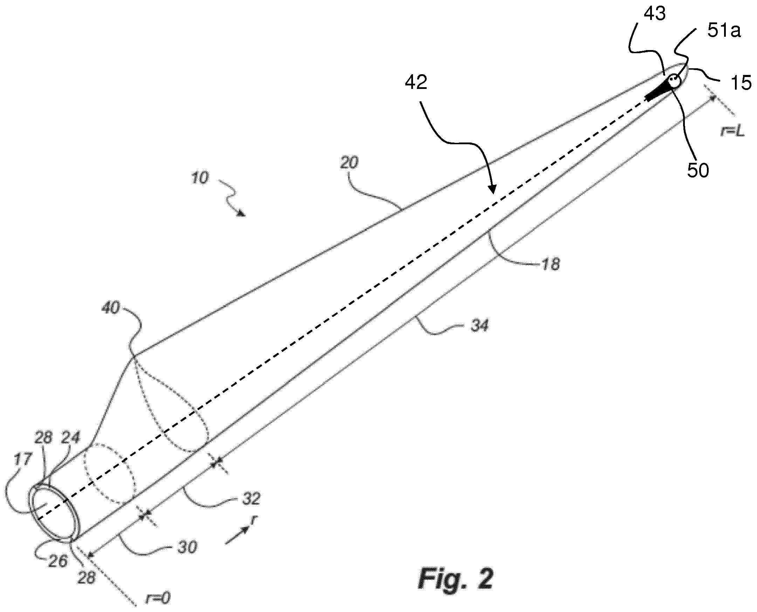

Fig. 2 shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell may comprise two blade shell parts, a first blade shell part 24 and a second blade shell part 26, typically made of fibre-reinforced polymer. The first blade shell part 24 is typically a pressure side or upwind blade shell part. The second blade shell part 26 is typically a suction side or downwind blade shell part. The first blade shell part 24 and the second blade shell part are typically glued together along bond lines or glue joints 28 extending along the trailing edge 20 and the leading edge 18 of the blade 10. Typically, the root ends of the blade shell parts 24, 26 has a semi-circular or semi-oval outer cross-sectional shape.

The wind turbine blade 10 further comprises a lightning protection system 42. The lightning protection system 42 comprises a tip part 50 with at least one lightning receptor 51a positioned near the tip end 15 in a tip end region 43 of the wind turbine blade 10.

When a lightning strikes the receptor 51a of the tip part 50, the current is directed down to a connection element (not shown) in the root region 30 of the wind turbine blade and further to the ground.

Details of the lightning protection system 42, which is preferably inserted between the blade shell parts 24, 26 are described with reference to the following drawings.

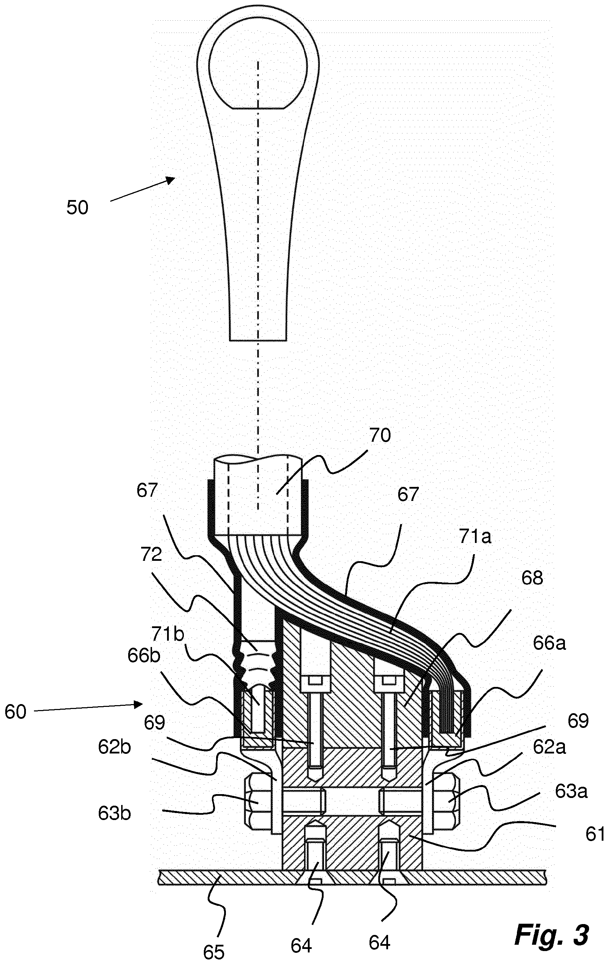

Fig. 3 is a sectional view of the root part 60 of the lightning protection system according to an embodiment of the invention.

The root part 60 is connected with a cable 70 to the tip part of the lightning protection system. The tip part 50 comprises the lightning receptor (not shown in this view). If a lightning strikes the lightning receptor, the current is directed down the wind turbine blade via the cable 70 to the root part 60.

The cable 70 is embodied as a coaxial cable, wherein the outer tubular conductor is a first conductor 71a which is connected with the lightning receptor and wherein the core is the second conductor 71b which is also connected with the lightning receptor.

At the root part 60, first 71a and second conductor 71b are separated and the tip of each conductor is soldered at the connections 66a and 66b to a cable shoe 62a, 62b. It should be understood, that the cable 70 is stripped at the tip and that also the inner insulation 72 of the core (second conductor 71b) is removed at the tip. E.g. a tin solder can be used for connecting the conductors 71a, 71b with the cable shoes 62a, 62b.

The first conductor 71a is provided by the wires of the wire screen of the coaxial cable 70 and the second conductor 71b is provided by the core. Since the wire screen of a coaxial cable 70 forms a Faraday cage, the risk of an electrical breakdown between the conductors 71a, 71b inside the cable 70 is minimized.

After the cable shoes 62a, 62b are connected, the conductors 71a, 71b can be wrapped with an insulation 67, e.g. a shrink tape.

The cable shoes 62a, 62b are connected with the screws 63a, 63b to a connection element, in this embodiment opposite to each other.

The connection element 61 may be embodied as block of copper, respectively a copper alloy. The connection element 61 is connected with the screws 64 to a segment flange 65, from where the current can be further diverted to the ground.

Adjacent to the connection element 61, a distance holder 68 is arranged between the first conductor 71a and the second conductor 71b. The distance holder 68 is made of dielectric material, e.g. plastic, and prevents that the first conductor 71a and the second conductor 71b are moved towards each other due to electromagnetic forces caused by the current when a lightning strikes the lightning receptor.

The distance holder 68 is connected by means of the screws 69 to the connection element 61.

In order to inspect the lightning protection system by measuring the electrical resistance, only one of the cable shoes 62a, 62b, has to be removed in order to open the electrical connection between the conductors 71a, 71b in the root part 60 through the connection element 61. Now, a loop from the end of the first conductor 71a to the end of the second conductor 71b through the lightning receptor of the tip part 50 is formed. The resistance of this conductive path can be easily measured, e.g. avoiding the need of rappelling down the wind turbine blade to the tip in order to connect a probe to the lightning receptor.

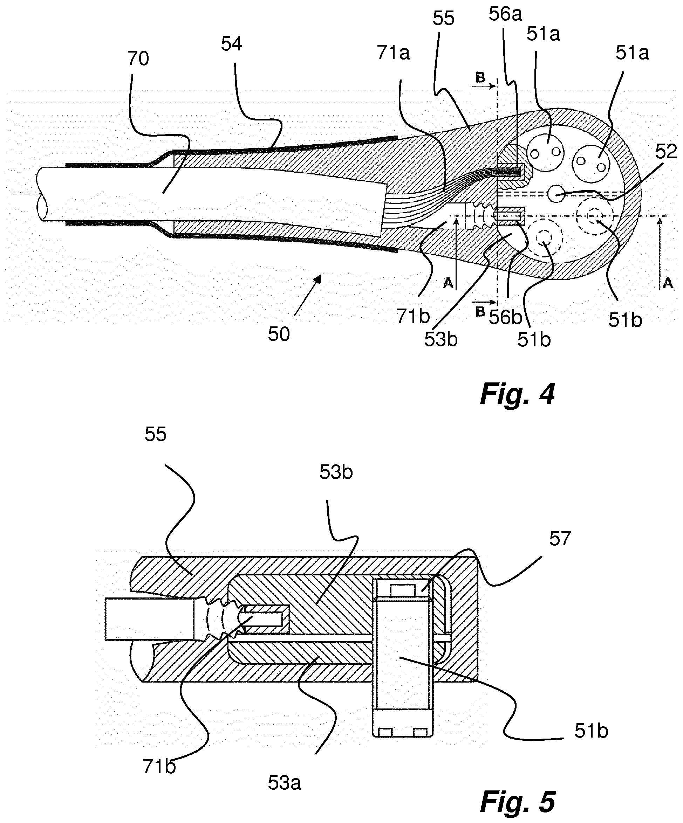

Fig. 4 is a sectional drawing of the tip part 50 of the lightning protection system. The tip part 50 is connected with the cable 70 to the root part (Fig. 3).

The tip part comprises a housing 55, which consists of a dielectric material, e.g. a polyurethane. The cable 70 is inserted into the housing 55. An insulation 54, e.g. a shrink tape, is arranged in the connection area between the housing 55 and the cable 70. First 71a and second conductor 71b of the cable are separated and stripped at the tip of the cable 70.

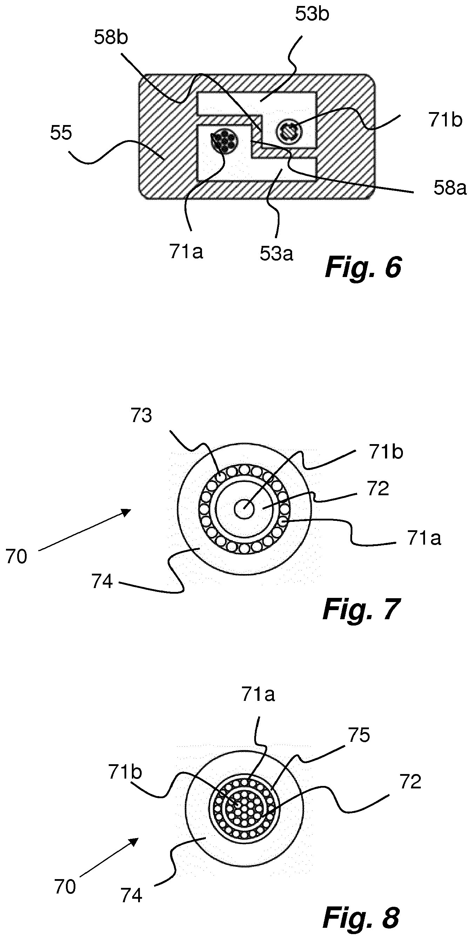

The first conductor 71a is connected at the connection area 56a with a first connection block (53a in Fig. 5 and Fig. 6), e.g. by soldering. To provide an insight into the connection area 56a, the sectional plane of this sectional drawing in the connection area 56a is lower with respect to the residual sectional plane.

The second conductor 71b is connected to a second connection block 53b, e.g. by soldering.

As shown in Fig. 5, which is a sectional view along line A-A of Fig. 4, the connection blocks 53a, 53b are arranged opposite to each other, such as above each other as illustrated. Preferably, the connection blocks 53a, 53b consist of copper, respectively a copper alloy.

Referring back to Fig. 4, in this embodiment, two lightning receptors 51a, 51b, are inserted from each side of the wind turbine blade.

The connection blocks 53a, 53b each have a circular shape, and the lightning receptors 51a, 51b are arranged along a circular arc.

The tip part 50 further comprises a magnet 52 inside the housing. According to this embodiment, the magnet is placed in the middle of the circular arc. The magnet serves as a marker when drilling holes for the lightning receptors 51a, 51b through the shell of the wind turbine blade.

As shown in Fig. 5, an electrical connection is established between the connection blocks 53a, 53b, when a receptor 51a is inserted in a channel 57, which extends through the first connection block 53a and the second connection block 53b. The channel in the connection block 53b is embodied as a blind hole and provides a stop for the lightning receptor 51b.

The first conductor 71a is soldered to the first connection block 53a. The second conductor 71b is soldered to the second connection block 53b, e.g. the second conductor 71b is soldered into a soldering hole of the second connection block 53b.

As shown in Fig. 6, which is a sectional view along line B-B of Fig. 4, the connection blocks 53a, 53b are angular shaped and aligned with respect to each other. Each connection block 53, 53b comprises a step 58a, 58b, so that each connection block is divided into a thick and a thin area. This enables to connect each conductor 71a, 71b in the thicker area of the angular part.

The first conductor 71a is the soldered wire screen of the coaxial cable, which is soldered into the first connection block 53a, and the second conductor 71b is the core, which is soldered into the second connection block 53b.

Preferably the lightning receptors are inserted from such a direction that the channel (57 in Fig. 5) first extends towards the thinner area of a connection block 53a, 53b and terminates in the thicker area.

So, a compact construction with a sufficient conductor cross section in each area can be provided.

Fig. 7 is a cross sectional view of a first embodiment of a coaxial cable 70 which can be used for the invention.

This embodiment corresponds to a coaxial cable 70 which is used for signal transmission.

The coaxial cable comprises a core (e.g. copper or aluminium), which forms the second conductor 71b which is surrounded by an inner insulation 72. The inner insulation 72 is surrounded by a screen of wires 73, preferably of copper wires 73, which forms the first conductor 71a. The wire screen is surrounded by an outer insulation 74.

Since such coaxial cable may normally be used for signal transmission, the inner insulation 72 may be embodies as a foam material with air keeping an exact distance between core and shield and with an exact impedance matching.

Preferably, the outer insulation 74 according to all embodiments of the inventions, which also forms the mantle of the cable, is a cross-linked polyethylene. This material is very robust and tolerant against environmental stress.

Fig. 8 is a cross sectional view of a coaxial cable 70 which is optimized to be used for lightning protection.

The core which provides the second conductor 71b may consist of drawn wires and/or copper wires, such as drawn copper wires. Since an impedance matching plays no major role for the lightning protection purpose, the inner insulation 72 between the inner second conductor 71b and the outer first conductor 71a can be thinner as it is according to the embodiment of Fig. 7.

In further, the outer conductor 71a formed by the wire screen is wrapped with a semi-conductive compound 75 followed by the outer insulation 74. The semi-conductive compound 75 homogenizes the electric field and reduces the risk of an electrical breakdown to conductive components being arranged near the cable 70.

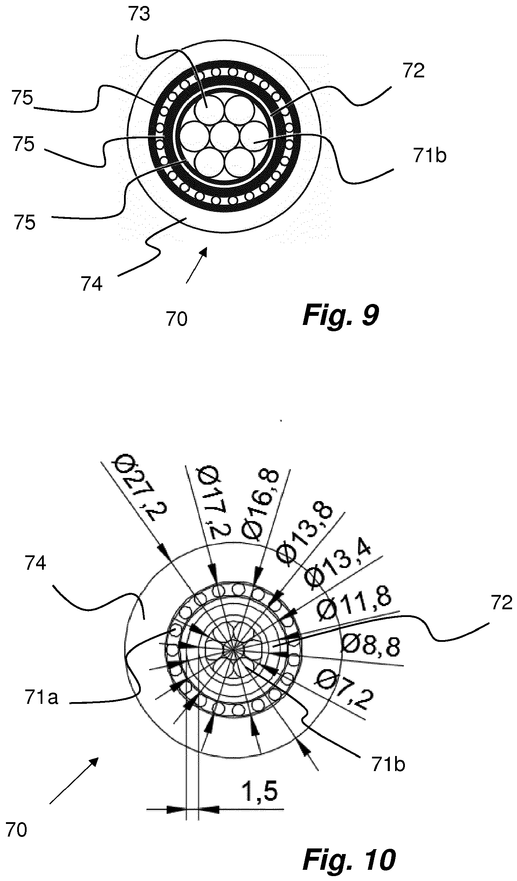

Fig. 9 is a cross sectional view of a further embodiment of a coaxial cable 70 which is optimized for the lightning protection system.

The core forming the second conductor 71b consists of wires 73, such as copper wires and is wrapped by a semi-conductive compound 75. Preferably, the core has a cable cross section area between 30 and 40 mm².

An inner insulation 72 is arranged between the core, which forms the second conductor 71b, and the outer wire screen, which forms the first conductor 71a. Preferably, the inner insulation 72 has a wall thickness of less than 2 mm.

Preferably, the outer wire screen also has a cable cross section area between 30 and 40 mm².

The outer wire screen is wrapped on its inner side as well on its outer side by a semi-conductive compound 75.

Since the electric field of both conductors 71a, 71b is homogenized between the conductors, the risk of an electrical breakdown between the conductors 71a, 71b is minimized.

Preferably, the outer insulation (e.g. cross-linked polyethylene) has a wall thickness of 3-7 mm.

So, a robust, but thin cable with a sufficient cable cross section area for lightning protection can be provided.

Fig. 10 is a dimensioned drawing of a coaxial cable according to a preferred embodiment of the invention.

The entire diameter of the cable 70 is less than 30 mm. Nevertheless, the cable 70 has a total cable cross section area (first conductor 71a and second conductor 71b in total) of more than 60 mm², so that one single cable is sufficient for diverting the current of lightning which strikes a lightning receptor.

Preferably, the inner core has a diameter of 6.5 - 8 mm and the wire screen has an outer diameter of 16 - 20 mm. Preferably, the thickness of the inner insulation 72 is between 1 and 2 mm.

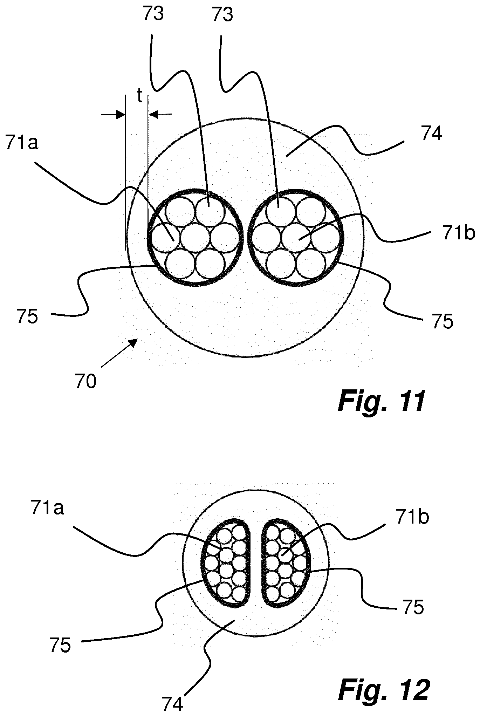

Fig. 11 is a cross sectional view of a cable 70 according to an alternative embodiment of the invention. The cable 70 is embodied as a two-core cable 70 comprising the first conductor 71a as a first core and the second conductor 71b as a second core.

The cores consist of wires 73, such as copper wires, which may be drawn copper wires. The cores each have an essentially circular cross section. Preferably, the cores each have a cable cross section area between 30 and 40 mm². In order to avoid voltage differences which might result in an electrical breakdown between the first 71a and the second conductor 71b, the first conductor 71a has the same cable cross section area as the second conductor 71b. Also the length of the conductors 71a, 71b from the connection blocks in the tip part to the connection element in the root part should be the same, or substantially the same.

Both cores are wrapped with a semi-conductive compound 75. The cores are embedded in an insulation 74, preferably a cross-linked polyethylene.

Preferably, the minimum thickness t of the insulation is between 4 and 7 mm.

Fig. 12 is a cross sectional view of a further embodiment of a two-core cable 70, which can be used for a lightning protection system according to the invention.

In contrary to the embodiment of Fig. 11, the cores have a non-circular cross section, such as a kidney-shaped cross section. This enables to provide a cable 70 with a smaller diameter compared to the embodiment according to Fig. 11. Further features of this cable correspond with described above with respect to the embodiment according to Fig. 11.

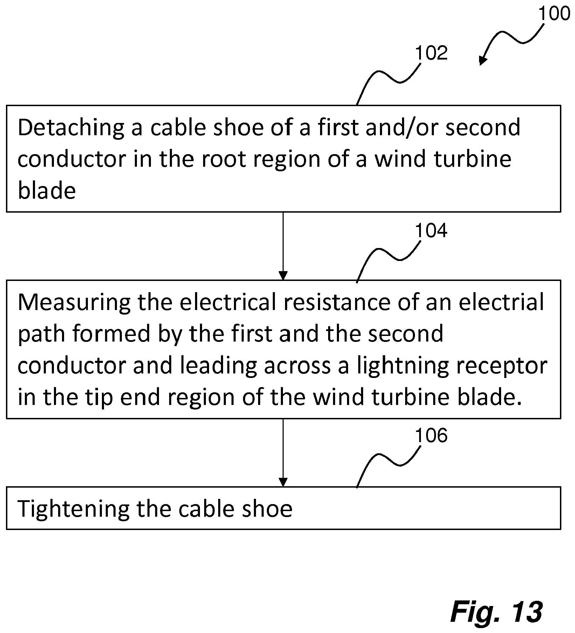

Fig. 13 is a flow chart of a method 100 of testing a lightning protection system according to an embodiment of the invention.

Preferably, a lightning protection system is tested as described with reference to Fig. 1 to Fig. 6.

First, a cable shoe of a first and/or second conductor in the root region of the wind turbine blade is detached 102.

Since first and second conductor form a loop to the lightning receptor, the electrical resistance of an electrical path formed by the first and the second conductor and leading across a receptor in the tip end region of the wind turbine blade can be easily measured 104 without connecting the lightning receptor with a probe.

The measurement is preferably performed by four-terminal sensing method.

After performing the measurement, the cable shoe can be re-attached, e.g. tightened, 106 and the testing is finished.

The invention has been described with reference to preferred embodiments. However, the scope of the invention is not limited to the illustrated embodiments, and alterations and modifications can be carried out without deviating from the scope of the invention.

### LIST OF REFERENCES

- 2: wind turbine
- 4: tower
- 6: nacelle
- 8: hub
- 10: blade
- 14: blade tip
- 15: tip end
- 16: blade root
- 17: root end
- 18: leading edge
- 20: trailing edge
- 24: first blade shell part (pressure side)
- 26: second blade shell part (suction side)
- 28: bond lines/glue joints
- 30: root region
- 32: transition region
- 34: airfoil region
- 40: shoulder
- 42: lightning protecting system
- 43: tip end region
- 50: tip part
- 51a: lightning receptor
- 51b: lightning receptor
- 52: magnet
- 53a: connection block
- 53b: connection block
- 54: insulation (e.g. cold shrink flex)
- 55: housing (e.g. PUR)
- 56a: connection area (soldered)
- 56b: connection area (soldered)
- 57: channel
- 58a: step
- 58b: step
- 60: root part
- 61: connection element
- 62a: cable shoe
- 62b: cable shoe
- 63a: screw
- 63b: screw
- 64: screw
- 65: segment flange
- 66a: soldered connection
- 66b: soldered connection
- 67: insulation (shrink tape)
- 68: distance holder
- 69: screw
- 70: cable
- 71a: first conductor
- 71b: second conductor
- 72: insulation (inner insulation between first and second conductor)
- 73: wire
- 74: insulation (outer insulation)
- 75: semi-conductive compound
- 100: method
- 102: detaching a cable shoe
- 104: measuring electrical resistance
- 106: re-attaching the cable shoe

## Claims

1. Lightning protection system of a wind turbine blade, comprising:
- at least one lightning receptor configured to be mounted in a tip end region of the wind turbine blade;
- a first conductor and a second conductor, the first conductor and the second conductor being configured to lead to a root region of the wind turbine blade, wherein the first and the second conductor are connected at the at least one lightning receptor.

2. Lightning protection system according to claim 1, wherein the first conductor is the outer conductor of a coaxial cable and the second conductor is the inner conductor of the coaxial cable.

3. Lightning protection system according to claim 1, wherein the first and the second conductor are part of a two-core cable, and wherein the first conductor has the same cross sectional area and the same length as the second conductor.

4. Lightning protection system according to any of the preceding claims, wherein the first conductor is connected with a first connection block in the tip end region and the second conductor is connected with a second connection block, which is arranged opposite to the first connection block, wherein the at least one lightning receptor is inserted in a channel leading through the first and second connection block.

5. Lightning protection system according to claim 4, wherein the first connection block and the second connection block are each embodied as an angular part.

6. Lightning protection system according to any of the preceding claims, wherein the first and the second conductor are detachable connected with a connection element, being configured to be mounted at the root region of the wind turbine blade.

7. Lightning protection system according to any of the preceding claims, comprising at least two lightning receptors which are connected with the first and the second conductor, wherein a first lightning receptor of the at least two lightning receptors is embodied to be inserted at the pressure side of the wind turbine blade and wherein a second lightning receptor of the at least two lightning receptors is embodied to be inserted at the suction side of the wind turbine blade.

8. Lightning protection system according to any of the preceding claims, wherein the first conductor and/or the second conductor comprises a semi-conductive wrapping.

9. Wind turbine, comprising a lightning protection system according to any of the preceding claims.

10. Method for testing a lightning protection system of a wind turbine, in particular of a wind turbine according to the preceding claim,
wherein the wind turbine comprises a wind turbine blade with a least one lightning receptor in a tip end region being connected with a first conductor and a second conductor, wherein the first and the second conductor lead to a root region of the wind turbine blade, the method comprising:
- testing the electrical resistance of an electrical path leading from an end of the first conductor in the root region to the lightning receptor in the tip end region and from the receptor back through the second conductor to an end of the second conductor in the root region.

11. Method according to the preceding claim, wherein the electrical resistance is measured with a four-terminal sensing method.

12. Method according to any of claims 10-11, wherein, prior to the testing of the electrical resistance, the first and/or the second conductor are detached at a connection element in the root region of the wind turbine blade.
